# EUROPEAN PATENT APPLICATION

(11) **EP 4 557 455 A1**
(43) Date of publication of application: **21.05.2025**
(21) Application number: 23209780.8
(22) Date of filing: 14.11.2023
(51) Int. Cl.: H01M 10/613, H01M 10/625, H01M 10/643, H01M 10/6557, H01M 50/213, H01M 50/244, H01M 50/249

(54) **A BATTERY MODULE ARRANGEMENT, A BATTERY PACK, AND A VEHICLE**

(71) Applicant: VOLVO TRUCK CORPORATION, 405 08 Göteborg (SE)
(72) Inventor: Rout, Dhirendra, 422 54 Göteborg (SE); Lindelöw, Fredrik, 541 94 Skövde (SE); Jonsson, Kasper, 417 57 Göteborg (SE); Irannezhad, Mike, 411 20 Göteborg (SE)
(74) Representative: Kransell & Wennborg KB

(57) **Abstract**

The disclosure relates to a battery module arrangement (1) for a battery pack (100), the battery module arrangement (1) having a longitudinal extension in a longitudinal direction (L), a width extension in a width direction (W) and a height extension in a height direction (H), the battery module arrangement (1) comprises a first set of cylindrical battery cells (2) and a first holder (3). The disclosure also relates to a battery pack (100) and to a vehicle (200).

## Description

### TECHNICAL FIELD

The disclosure relates generally to energy storage systems. In particular aspects, the disclosure relates to a battery module arrangement, a battery pack, and to a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery modules, wherein each module comprises a stack of battery cells. The battery cells may be cylindrical battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery module arrangement for a battery pack is provided. The battery module arrangement has a longitudinal extension in a longitudinal direction, a width extension in a width direction and a height extension in a height direction. The battery module arrangement comprises:
- a first set of cylindrical battery cells,
- a first holder for the first set of cylindrical battery cells, the first holder having a first side facing in a first direction which corresponds to the longitudinal direction and a second side facing in a second direction being opposite to the first direction, wherein the first holder comprises a plurality of cylindrical apertures and wherein each cylindrical aperture extends through the first holder along the longitudinal direction between the first and second sides, wherein each cylindrical battery cell of the first set of cylindrical battery cells is provided in a respective cylindrical aperture of the plurality of cylindrical apertures such that the cylindrical battery cell has a longitudinal extension along the longitudinal direction, and wherein each cylindrical battery cell of the first set of cylindrical battery cells is provided in the respective cylindrical aperture such that the cylindrical battery cell protrudes from the first holder on the first side and on the second side. The first aspect of the disclosure may seek to provide an improved battery module arrangement which is reliable, robust and space efficient. A technical benefit may include that by providing a first holder as disclosed herein, where the cylindrical battery cells protrude from both sides of the first holder, a more space efficient packaging in the longitudinal direction may be achieved. Further technical benefits may include that the configuration allows for increased design freedom, and/or that it may facilitate installation of cooling features for the cylindrical battery cells.

The height direction typically corresponds to a vertical direction when the battery module arrangement is used. Accordingly, the height direction may be defined as a normal to a substantially horizontally extending plane. The longitudinal direction, the width direction and the height direction are perpendicular to each other. The longitudinal extension of each cylindrical battery cell extends along a center axis of the cylindrical battery cell.

Optionally in some examples, including in at least one preferred example, the battery module arrangement comprises:
- a second set of cylindrical battery cells,
- a second holder for the second set of cylindrical battery cells, the second holder having a third side facing in the first direction and a fourth side facing in the second direction, and wherein the fourth side of the second holder is facing the first side of the first holder, wherein the second holder comprises a plurality of cylindrical apertures and wherein each cylindrical aperture extends through the second holder along the longitudinal direction between the third and fourth sides,
   wherein each cylindrical battery cell of the second set of cylindrical battery cells is provided in a respective cylindrical aperture of the plurality of cylindrical apertures such that the cylindrical battery cell has a longitudinal extension along the longitudinal direction, and wherein each cylindrical battery cell of the second set of cylindrical battery cells is provided in the respective cylindrical aperture such that the cylindrical battery cell protrudes from the second holder on the third side and on the fourth side. A technical benefit may include that a more space efficient packaging in the longitudinal direction may be achieved, comprising at least two sets of adjacently stacked cylindrical battery cells.

Optionally in some examples, including in at least one preferred example, the battery module arrangement comprises a bottom bracket provided below the first and second holders, as seen in the height direction, wherein the bottom bracket connects the first and second holders and is configured as a load-bearing support structure for the first and second holders. A technical benefit may include that loads can be transferred at two offset locations, i.e., between the first holder and the bottom bracket, and also between the second holder and the bottom bracket. Thereby, a more robust and rigid configuration may be achieved, e.g., reducing the risk of unwanted vibrations when the battery module arrangement is used on a moving object, such as on a vehicle.

Optionally in some examples, including in at least one preferred example, the battery module arrangement comprises at least one side bracket provided on a side of the first and second holders which faces away from the battery module arrangement in a direction along the width direction, wherein the at least one side bracket connects the first and second holders. A technical benefit may include that a more robust and rigid configuration is achieved, e.g. reducing the risk of unwanted vibrations when the battery module arrangement is used on a moving object, such as on a vehicle.

Optionally in some examples, including in at least one preferred example, the bottom bracket and/or the at least side bracket connect(s) the first and second holders by at least one of a weld and a fastening member, such as a screw, rivet or bolt.

Optionally in some examples, including in at least one preferred example, the first holder comprises:
- a first wall member associated with the first side and a second wall member associated with the second side, wherein the first and second wall members are offset from each other in the longitudinal direction such that a space is formed therebetween. A technical benefit may include that a lightweight first holder is achieved. The first and second wall members may form a hollow profile, as seen in a sectional plane defined by the width direction and the height direction.

Optionally in some examples, including in at least one preferred example, the second holder comprises:
- a third wall member associated with the third side and a fourth wall member associated with the fourth side, wherein the third and fourth wall members are offset from each other in the longitudinal direction such that a space is formed therebetween. A technical benefit may include that a lightweight second holder is achieved. The third and fourth wall members may form a hollow profile, as seen in a sectional plane defined by the width direction and the height direction.

Optionally in some examples, including in at least one preferred example, the battery module arrangement further comprises a cooling plate member for cooling the cylindrical battery cells, wherein the cooling plate member is located adjacent the first side of the first holder and extends in the width direction and the height direction such that the cooling plate member faces each one of end portions of the first set of cylindrical battery cells. A technical benefit may include that cooling of the first set of cylindrical battery cells is achieved in a space efficient manner.

Optionally in some examples, including in at least one preferred example, the cooling plate member is further located adjacent the fourth side of the second holder and extends in the width direction and the height direction such that the cooling plate member faces each one of end portions of the second set of cylindrical battery cells. A technical benefit may include that cooling of the first and second sets of cylindrical battery cells is achieved in a space efficient manner.

Optionally in some examples, including in at least one preferred example, the cooling plate member comprises an inlet and an outlet for coolant fluid, wherein the inlet and/or the outlet are/is provided at a side of the battery module arrangement which is facing away from the battery module arrangement in a direction which is substantially perpendicular to the longitudinal direction. A technical benefit may include that a more favorable location for the respective cooling inlet/outlet is achieved, resulting in e.g., a more space efficient configuration.

Optionally in some examples, including in at least one preferred example, the battery module arrangement comprises a bottom bracket provided below the first holder, as seen in the height direction, wherein the cooling plate member is connected to the first holder and to the bottom bracket such that loads can be transferred via the cooling plate member between the first holder and the bottom bracket. A technical benefit may include that the cooling plate member is not only used for cooling, but is also used for providing structural support in the battery module arrangement.

According to a second aspect of the disclosure, a battery pack comprising at least one battery module arrangement according to any one of the examples of the first aspect of the disclosure is provided. The second aspect of the disclosure may seek to provide an improved battery pack which is reliable, robust and space efficient. A technical benefit may include that an efficient packaging in the longitudinal direction may be achieved. Further technical benefits may include that the configuration allows for increased design freedom, it may facilitate installation of cooling features for the cylindrical battery cells, and/or it may result in a rigid configuration which reduces the risk of vibrations.

Optionally in some examples, including in at least one preferred example, the battery pack comprises a housing, and the at least one battery module arrangement is provided in the housing. A technical benefit may include that the at least one battery module arrangement is protected by the housing.

Optionally in some examples, including in at least one preferred example, the battery pack comprises at least two battery module arrangements according to any one of the examples of the first aspect of the disclosure, wherein the battery module arrangements are stacked next to each other along a longitudinal direction of the battery pack which corresponds to the longitudinal directions of the at least two battery module arrangements. A technical benefit may include that a space efficient packaging is achieved.

Optionally in some examples, including in at least one preferred example, the battery pack comprises at least one connecting bracket which connects, i.e., mechanically connects, the at least two battery module arrangements. A technical benefit may include that improved structural support is provided, resulting in a more robust and rigid battery pack.

Optionally in some examples, including in at least one preferred example, the at least one connecting bracket connects the at least two battery module arrangements via respective sides of the battery module arrangements which are facing away from the battery module arrangements in a direction which is substantially perpendicular to the longitudinal direction of the battery pack. A technical benefit may include that a space efficient and robust battery pack is achieved, where there e.g., is no need for further connecting brackets on other sides of the battery module arrangements which are perpendicular to the first and second directions.

Optionally in some examples, including in at least one preferred example, the at least one connecting bracket is further connected to the housing, such as by at least one weld and/or by a fastening member, such as a screw, rivet or bolt.

Optionally in some examples, including in at least one preferred example, the battery pack comprises a plurality of connecting brackets which extend in the longitudinal direction of the battery pack and which are arranged on top of each other in a height direction of the battery pack, which corresponds to the height directions of the at least two battery module arrangements. A technical benefit may include that a more robust and rigid battery pack is achieved.

Optionally in some examples, including in at least one preferred example, the at least one connecting bracket connects the at least two battery module arrangements by at least one of a weld and a fastening member, such as a screw, rivet or bolt.

According to a third aspect of the disclosure, a vehicle comprising a battery module arrangement according to any one of the examples of the first aspect of the disclosure and/or a battery pack according to any one of the examples of the second aspect of the disclosure is provided. Advantages and effects of the third aspect of the disclosure are analogous to the advantages and effects of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary battery module arrangement in a perspective view according to an example.
**FIG. 2b** is an exemplary holder of a battery module arrangement in a perspective view according to an example.
**FIG. 2c** is an exemplary battery module arrangement in a sectional view according to an example.
**FIG. 3a** is an exemplary battery module arrangement in a perspective view according to an example.
**FIG. 3b** is an exemplary battery module arrangement in a sectional view according to an example.
**FIG. 3c** is an exemplary battery module arrangement in a perspective view according to an example.
**FIG. 4** is an exemplary battery module arrangement in a sectional view according to an example.
**FIG. 5a** is an exemplary battery pack in a perspective view according to an example.
**FIG. 5b** is an exemplary battery pack in a perspective view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide an improved battery module arrangement, a battery pack, and/or a vehicle, which alleviate one or more drawbacks of the prior art, or which at least provide suitable alternatives. For example, an aim of the present disclosure is to provide a battery module arrangement and/or a battery pack which is/are reliable, robust, space efficient, and/or cost effective.

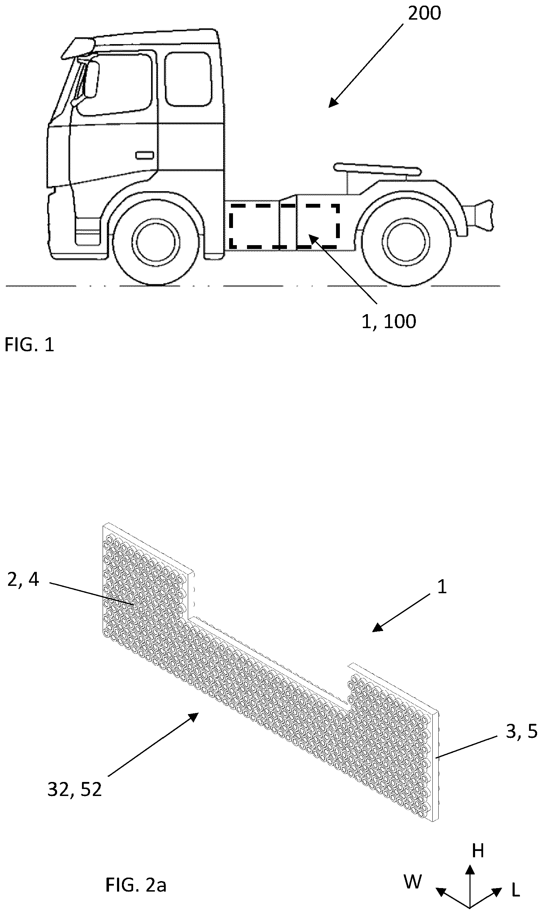

**Fig. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery module arrangement 1 and a battery pack 100 according to an example disclosed herein. The battery pack 100 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery module arrangement 1 and the battery pack 100 as disclosed herein may also be used in a stationary unit, such as a building and/or any stationary machinery.

**FIG. 2a** is an exemplary battery module arrangement 1 in a perspective view according to an example. The battery module arrangement 1 has a longitudinal extension in a longitudinal direction L, a width extension in a width direction W and a height extension in a height direction H. In the examples disclosed herein, the height direction H may correspond to a vertical direction when the battery module arrangement 1 is provided on a flat horizontally extending surface. The directions L, W and H are perpendicular to each other.

The battery module arrangement 1 comprises a first set of cylindrical battery cells 2 and a first holder 3 for the first set of cylindrical battery cells 2. The cylindrical battery cells 2 may be any type of electrochemical battery cells, such as lithium-ion cells. The cylindrical battery cells 2 may be electrically connected in series and/or at least partly in parallel.

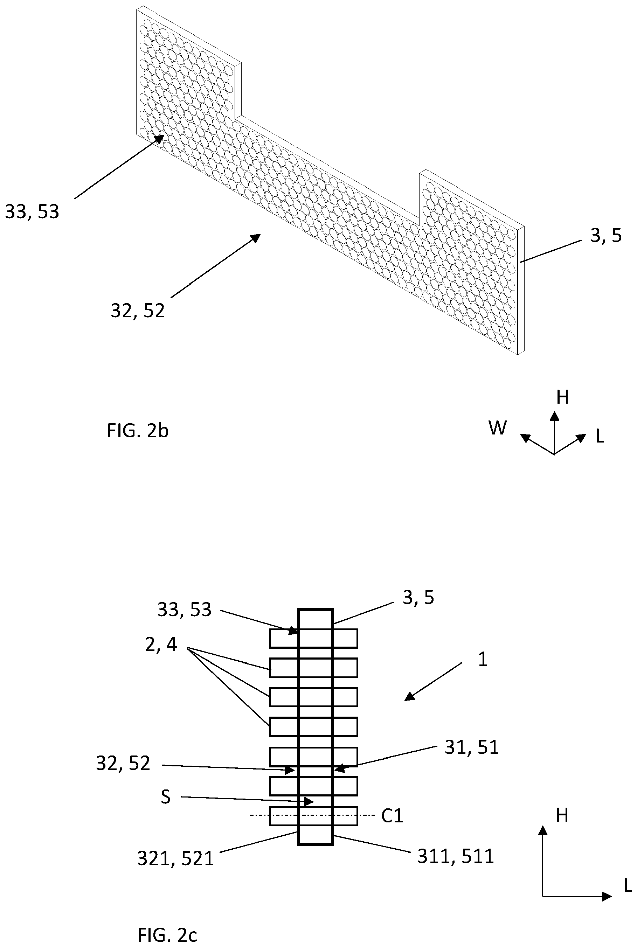

**FIG. 2b** shows an exemplary first holder 3 in perspective view according to an example. The first holder in FIG. 2b may for example be the first holder 3 as shown in FIG. 2a.

**FIG. 2c** shows a sectional view of a battery module arrangement 1 according to an example. For example, the battery module arrangement 1 in FIG. 2c may be the battery module arrangement 1 as shown in FIG. 2a. The sectional view is defined by a geometrical plane extending in the longitudinal direction L and the height direction H of the battery module arrangement 1.

With reference to e.g., FIGS. 2a-2c, the first holder 3 has a first side 31 facing in a first direction which corresponds to the longitudinal direction L and a second side 32 facing in a second direction being opposite to the first direction. The first holder 3 comprises a plurality of cylindrical apertures 33 and each cylindrical aperture 33 extends through the first holder 3 along the longitudinal direction L between the first and second sides 31, 32. Each cylindrical battery cell 2 of the first set of cylindrical battery cells 2 is provided in a respective cylindrical aperture 33 of the plurality of cylindrical apertures 33 such that the cylindrical battery cell 2 has a longitudinal extension along the longitudinal direction L. More specifically, a respective center axis C1 of each cylindrical battery cell 2 extends along the longitudinal direction L. Accordingly, in some examples, the center axis C1 of each battery cell 2 may extend along a horizontal direction when the battery module arrangement 1 is provided on a flat horizontally extending surface. Each cylindrical battery cell 2 of the first set of cylindrical battery cells 2 is provided in the respective cylindrical aperture 33 such that the cylindrical battery cell 2 protrudes from the first holder 3 on the first side 31 and on the second side 32.

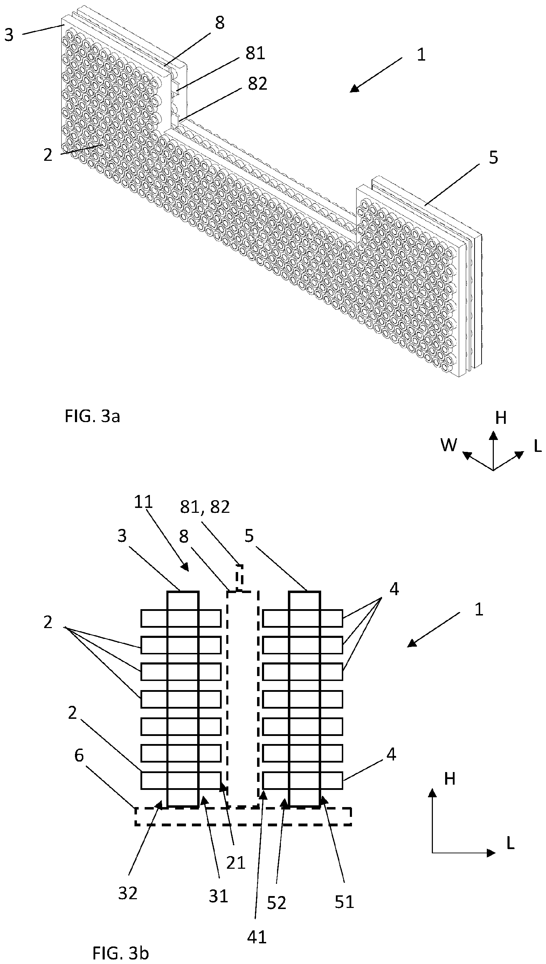

**FIG. 3a** is an exemplary battery module arrangement 1 in perspective view according to an example. As shown, the battery module arrangement 1 may comprise the first set of battery cells 2 and the first holder 3 as e.g., shown in FIGS. 2a-c. The battery module arrangement 1 may further comprise a second set of cylindrical battery cells 4 and a second holder 5 for the second set of cylindrical battery cells 4. The second set of cylindrical battery cells 4 and the second holder 5 may be configured as the first set of cylindrical battery cells 2 and the first holder 3, respectively. Accordingly, the example shown in FIGS. 2a-c may also depict the second set of cylindrical battery cells 4 and the second holder 5.

The second holder 5 has a third side 51 facing in the first direction and a fourth side 52 facing in the second direction. The fourth side 52 of the second holder 5 is facing the first side 31 of the first holder 3. The second holder 5 comprises a plurality of cylindrical apertures 53 and each cylindrical aperture 53 extends through the second holder 5 along the longitudinal direction L between the third and fourth sides 51, 52. Each cylindrical battery cell 4 of the second set of cylindrical battery cells 4 is provided in a respective cylindrical aperture 53 of the plurality of cylindrical apertures 53 such that the cylindrical battery cell 4 has a longitudinal extension along the longitudinal direction L, and each cylindrical battery cell 4 of the second set of cylindrical battery cells 4 is provided in the respective cylindrical aperture 53 such that the cylindrical battery cell 4 protrudes from the second holder 5 on the third side 51 and on the fourth side 52. Similar to the above, in some examples, the center axis C1 of each battery cell 4 may extend along a horizontal direction when the battery module arrangement 1 is provided on a flat horizontally extending surface.

**FIG. 3b** shows a sectional view of a battery module arrangement 1 according to an example. For example, the battery module arrangement 1 may be the battery module arrangement 1 shown in FIG. 3a. The sectional view is also here defined by a geometrical plane extending in the longitudinal direction L and the height direction H of the battery module arrangement 1.

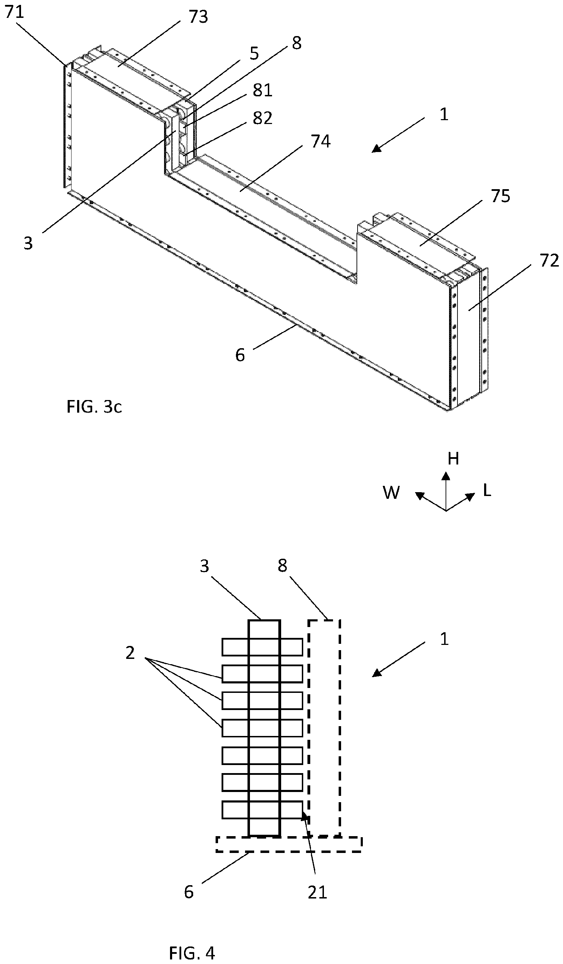

**FIG. 3c** shows a battery module arrangement 1 in a perspective view according to an example.

With reference to e.g., FIGS. 3b and 3c, the battery module arrangement 1 may as shown comprise a bottom bracket 6 provided below the first and second holders 3, 5, as seen in the height direction H. The bottom bracket 6 connects, i.e., mechanically connects, the first and second holders 3, 5 and is configured as a load-bearing support structure for the first and second holders 3, 5. As may be gleaned in FIG. 3c, the bottom bracket 6 may be a plate member, such as made of a fiber reinforced polymer or a metallic material, e.g., aluminum.

The battery module arrangement 1 may as shown in FIG. 3c further comprise at least one side bracket 71, 72 provided on a side of the first and second holders 3, 5 which faces away from the battery module arrangement 1 in a direction along the width direction W, wherein the at least one side bracket 71, 72 connects the first and second holders 3, 5, i.e., mechanically connects the first and second holders 3, 5. In the shown example, the battery module arrangement 1 comprises a first side bracket 71 and a second side bracket 72, provided on opposite sides of the battery module arrangement 1. Similar to the bottom bracket 6, the at least one side bracket 71, 72 may be a plate member, such as made of a fiber reinforced polymer or a metallic material, e.g., aluminum.

In the example shown in FIG. 3c, the battery module arrangement 1 further comprises at least one top bracket 73, 74, 75 facing upwardly in the height direction H. More specifically, in the example shown, the battery module arrangement 1 comprises a first top bracket 73, a second top bracket 74 and a third top bracket 75. The at least one top bracket 73, 74, 75 connects the first and second holders 3, 5, i.e., mechanically connects the first and second holders 3, 5. Similar to the above, the at least one top bracket 73, 74, 75 may be a plate member, such as made of a fiber reinforced polymer or a metallic material, e.g., aluminum.

By the above-mentioned bottom bracket(s), side bracket(s) and top bracket(s), an at least partly enclosed battery module arrangement 1 may be provided. This may result in a more robust and rigid arrangement.

Any one of the aforementioned brackets 6, 71, 72, 73, 74, 75 may connect the first and second holders 3, 5 by at least one of a weld and a fastening member, such as a screw, rivet or bolt.

With reference to e.g., FIG. 2c, the first holder 3 may as shown comprise a first wall member 311 associated with the first side 31 and a second wall member 321 associated with the second side 32. The first and second wall members 311, 321 are offset from each other in the longitudinal direction L such that a space S is formed therebetween. Accordingly, the first holder 3 may be an at least partly hollow member, thereby saving weight. In a similar manner, the second holder 5 may additionally or alternatively comprise a third wall member 511 associated with the third side 51 and a fourth wall member 521 associated with the fourth side 52. The third and fourth wall members 511, 521 are offset from each other in the longitudinal direction L such that a space S is formed therebetween. The wall members may form the respective sides of the holders 3, 5.

With reference to e.g., FIGS. 3a-c, the battery module arrangement 1 may as shown comprise a cooling plate member 8 for cooling the cylindrical battery cells 2, 4. The cooling plate member 8 is located adjacent the first side 31 of the first holder 3 and extends in the width direction W and the height direction H such that the cooling plate member 8 faces each one of end portions 21 of the first set of cylindrical battery cells 2.

The cooling plate member 8 may further as shown be located adjacent the fourth side 52 of the second holder 5 and extend in the width direction W and the height direction H such that the cooling plate member 8 faces each one of end portions 41 of the second set of cylindrical battery cells 4. Accordingly, the cooling plate member 8 may as shown be located in-between the first and second holders 3, 5, for cooling the cylindrical battery cells 2, 4.

The cooling plate member 8 may comprise a cooling circuit (not shown) for coolant. The cooling plate member may comprise an inlet 81 and an outlet 82 for coolant fluid, wherein the inlet 81 and/or the outlet 82 are/is provided at a side 11 of the battery module arrangement 1 which is facing away from the battery module arrangement 1 in a direction which is substantially perpendicular to the longitudinal direction L. In FIG. 3b the side 11 is a top side of the battery module arrangement 1. However, as shown in FIGS. 3a and 3c, the inlet 81 and/or the outlet 82 may be provided on a side of the battery module arrangement 1 which faces in a direction along the width direction W. In the example shown in FIG. 3c, the battery module arrangement 1 has a U-shaped profile, wherein the inlet 81 and/or the outlet 82 are provided on an inner side of the U-shaped profile which faces in a direction along the width direction W.

**FIG. 4** depicts another exemplary battery module arrangement 1 according to an example. The battery module arrangement 1 comprises a bottom bracket 6 provided below the first holder 3, as seen in the height direction H. It also comprises a cooling plate member 8 according to examples disclosed herein. The cooling plate member 8 is connected, i.e., mechanically connected, to the first holder 3 and to the bottom bracket 6 such that loads can be transferred via the cooling plate member 8 between the first holder 3 and the bottom bracket 6. Hence, a robust and rigid arrangement may be provided without the use of a second holder as disclosed herein.

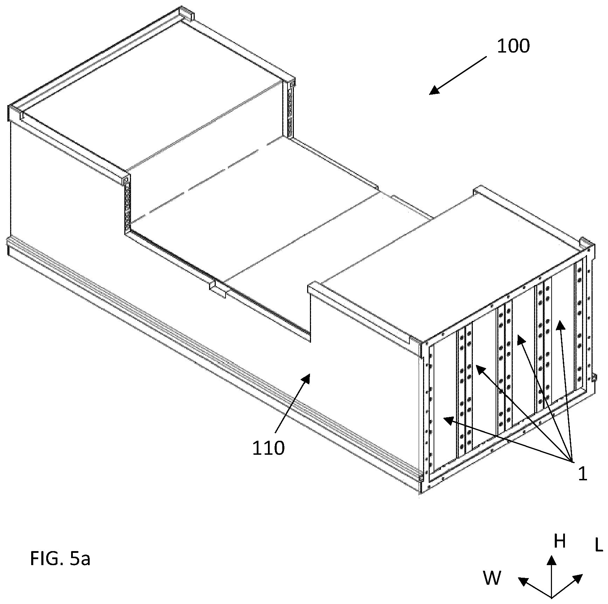

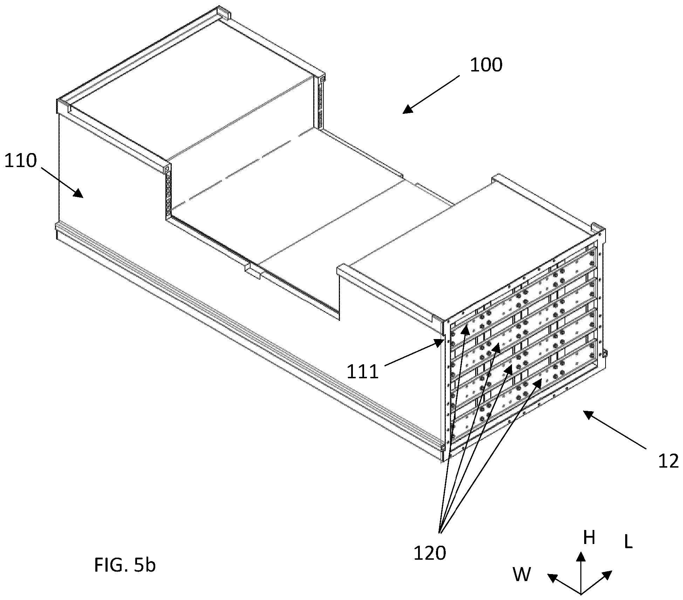

**FIG 5a** and **FIG. 5b** show exemplary battery packs 100 in perspective views according to examples. The battery pack 100 comprises at least one battery module arrangement 1 as disclosed herein. In the shown examples, the battery pack 1 comprises four battery module arrangements 1 stacked next to each other along the longitudinal direction L of the battery pack 100, which corresponds to the longitudinal direction L of the battery module arrangements 1. Accordingly, any number of battery module arrangement(s) 1 may be stacked next to each other in the longitudinal direction L of the battery pack 100, corresponding to the longitudinal direction L of the battery module arrangement(s) 1.

The directions L, W and H for the battery pack 100 may thus be the same as for the battery module arrangement 1 disclosed herein.

The battery pack 100 may as further shown comprise a housing 110, wherein the at least one battery module arrangement 1 is provided in the housing 110. Each battery module arrangement 1 may be configured as a separate cassette which is provided inside the housing 110. For example, each battery module arrangement 1 may be insertable and removable from the housing 110 from above, as seen in the height direction H. Additionally, or alternatively, each battery module arrangement 1 may be insertable and removable from the housing 110 from an outer side facing in a direction along the width direction W.

In the shown examples, the battery pack has a U-shaped profile, as seen in a geometrical plane extending in the width direction W and the height direction H. Thereby, beam members (not shown) of a vehicle chassis may extend at least partly inside the U-shaped profile along the longitudinal direction L. For example, the beam members of the vehicle chassis may extend in a longitudinal direction of the vehicle, corresponding to a travel direction of the vehicle. Hence, the U-shaped profile may result in improved packaging of the cylindrical battery cells 2, 4 inside a vehicle. In other examples the battery pack may have an L-shaped profile or an H-shaped profile.

With reference to FIG. 5b, the battery pack 100 may comprise at least one connecting bracket 120 which connects, i.e., mechanically connects, at least two of the battery module arrangements 1. In the shown example, the at least one connecting bracket 120 connects all of the battery module arrangements 1.

In the shown example, the at least one connecting bracket 120 connects the at least two battery module arrangements 1 via respective sides 12 of the battery module arrangements 1 which are facing away from the battery module arrangements 1 in a direction which is substantially perpendicular to the longitudinal direction L of the battery pack 100. In the shown example, the side 12 is an outer side of the housing 110 facing away from the battery pack 100. A similar configuration may also be provided on the opposite side of the housing 110.

In the shown example, there are four connecting brackets 120. However, it shall be noted that there may be more or fewer connecting brackets.

The at least one connecting bracket 120 may be connected to the housing 110, such as by at least one weld 111 and/or by a fastening member, such as a screw, rivet or bolt.

The connecting brackets 120 may as shown extend in the longitudinal direction L of the battery pack 100 and be arranged on top of each other in the height direction H of the battery pack which corresponds to the height directions H of the at least two battery module arrangements 1. The at least one connecting bracket 120 may connect the at least two battery module arrangements 1 by at least one of a weld and a fastening member, such as a screw, rivet or bolt.

In the following, possible features and feature combinations of the disclosure are recited as a list of Examples.

Example 1: A battery module arrangement (1) for a battery pack (100), the battery module arrangement (1) having a longitudinal extension in a longitudinal direction (L), a width extension in a width direction (W) and a height extension in a height direction (H), the battery module arrangement (1) comprising:
- a first set of cylindrical battery cells (2),
- a first holder (3) for the first set of cylindrical battery cells (2), the first holder (3) having a first side (31) facing in a first direction which corresponds to the longitudinal direction (L) and a second side (32) facing in a second direction being opposite to the first direction, wherein the first holder (3) comprises a plurality of cylindrical apertures (33) and wherein each cylindrical aperture (33) extends through the first holder (3) along the longitudinal direction (L) between the first and second sides (31, 32),

wherein each cylindrical battery cell (2) of the first set of cylindrical battery cells (2) is provided in a respective cylindrical aperture (33) of the plurality of cylindrical apertures (33) such that the cylindrical battery cell (2) has a longitudinal extension along the longitudinal direction (L), and
wherein each cylindrical battery cell (2) of the first set of cylindrical battery cells (2) is provided in the respective cylindrical aperture (33) such that the cylindrical battery cell (2) protrudes from the first holder (3) on the first side (31) and on the second side (32).

Example 2: The battery module arrangement (1) according to example 1, comprising:
- a second set of cylindrical battery cells (4),
- a second holder (5) for the second set of cylindrical battery cells (4), the second holder (5) having a third side (51) facing in the first direction and a fourth side (52) facing in the second direction, and wherein the fourth side (52) of the second holder (5) is facing the first side (31) of the first holder (3), wherein the second holder (5) comprises a plurality of cylindrical apertures (53) and wherein each cylindrical aperture (53) extends through the second holder (5) along the longitudinal direction (L) between the third and fourth sides (51, 52),

wherein each cylindrical battery cell (4) of the second set of cylindrical battery cells (4) is provided in a respective cylindrical aperture (53) of the plurality of cylindrical apertures (53) such that the cylindrical battery cell (4) has a longitudinal extension along the longitudinal direction (L), and
wherein each cylindrical battery cell (4) of the second set of cylindrical battery cells (4) is provided in the respective cylindrical aperture (53) such that the cylindrical battery cell (4) protrudes from the second holder (5) on the third side (51) and on the fourth side (52).

Example 3: The battery module arrangement (1) according to example 2, comprising a bottom bracket (6) provided below the first and second holders (3, 5), as seen in the height direction (H), wherein the bottom bracket (6) connects the first and second holders (3, 5) and is configured as a load-bearing support structure for the first and second holders (3, 5).

Example 4: The battery module arrangement (1) according to any one of examples 2-3, comprising at least one side bracket (71, 72) provided on a side of the first and second holders (3, 5) which faces away from the battery module arrangement (1) in a direction along the width direction (W), wherein the at least one side bracket (71, 72) connects the first and second holders (3, 5).

Example 5: The battery module arrangement (1) according to any one of examples 3-4, wherein the bottom bracket (6) and/or the at least side bracket (71, 72) according to claim 4 connects the first and second holders (3, 5) by at least one of a weld and a fastening member, such as a screw, rivet or bolt.

Example 6: The battery module arrangement (1) according to any one of the preceding examples, wherein the first holder (3) comprises:
- a first wall member (311) associated with the first side (31) and a second wall member (321) associated with the second side (32), wherein the first and second wall members (311, 321) are offset from each other in the longitudinal direction (L) such that a space (S) is formed therebetween.

Example 7: The battery module arrangement (1) according to any one of the preceding examples, when also being dependent on example 2, wherein the second holder (5) comprises:
- a third wall member (511) associated with the third side (51) and a fourth wall member (521) associated with the fourth side (52), wherein the third and fourth wall members (511, 521) are offset from each other in the longitudinal direction (L) such that a space (S) is formed therebetween.

Example 8: The battery module arrangement (1) according to any one of the preceding examples, further comprising a cooling plate member (8) for cooling the cylindrical battery cells (2, 4), wherein the cooling plate member (8) is located adjacent the first side (31) of the first holder (3) and extends in the width direction (W) and the height direction (H) such that the cooling plate member (8) faces each one of end portions (21) of the first set of cylindrical battery cells (2).

Example 9: The battery module arrangement (1) according to example 8, when also being dependent on example 2, wherein the cooling plate member (8) is further located adjacent the fourth side of the second holder (5) and extends in the width direction (W) and the height direction (H) such that the cooling plate member (8) faces each one of end portions (41) of the second set of cylindrical battery cells (4).

Example 10: The battery module arrangement (1) according to example 8 or 9, wherein the cooling plate member (8) comprises an inlet (81) and an outlet (82) for coolant fluid, wherein the inlet (81) and/or the outlet (82) are/is provided at a side (11) of the battery module arrangement (1) which is facing away from the battery module arrangement (1) in a direction which is substantially perpendicular to the longitudinal direction (L).

Example 11: The battery module arrangement (1) according to any one of examples 8-10, comprising a bottom bracket (6) provided below the first holder (3), as seen in the height direction (H), wherein the cooling plate member (8) is connected to the first holder (3) and to the bottom bracket (6) such that loads can be transferred via the cooling plate member (8) between the first holder (3) and the bottom bracket (6).

Example 12: A battery pack (100) comprising at least one battery module arrangement (1) according to any one of the preceding examples.

Example 13: The battery pack (100) according to example 12, comprising a housing (110), wherein the at least one battery module arrangement (1) is provided in the housing (110).

Example 14: The battery pack (100) according to any one of examples 12-13, comprising at least two battery module arrangements (1) according to any one of examples 1-11, wherein the battery module arrangements (1) are stacked next to each other along a longitudinal direction (L) of the battery pack (100) which corresponds to the longitudinal directions (L) of the at least two battery module arrangements (1).
Example 15: The battery pack (100) according to example 14, further comprising at least one connecting bracket (120) which connects the at least two battery module arrangements (1).

Example 16: The battery pack (100) according to example 15, wherein the at least one connecting bracket (120) connects the at least two battery module arrangements (1) via respective sides (12) of the battery module arrangements (1) which are facing away from the battery module arrangements (1) in a direction which is substantially perpendicular to the longitudinal direction (L) of the battery pack (100).

Example 17: The battery pack (100) according to example 15 or 16, when also being dependent on example 13, wherein the at least one connecting bracket (120) is further connected to the housing (110), such as by at least one weld (111) and/or by a fastening member, such as a screw, rivet or bolt.

Example 18: The battery pack (100) according to any one of examples 15-17, comprising a plurality of connecting brackets (120) which extend in the longitudinal direction (L) of the battery pack (100) and which are arranged on top of each other in a height direction (H) of the battery pack which corresponds to the height directions (H) of the at least two battery module arrangements (1).

Example 19: The battery pack (100) according to any one of examples 15-18, wherein the at least one connecting bracket (120) connects the at least two battery module arrangements (1) by at least one of a weld and a fastening member (), such as a screw, rivet or bolt.

Example 20: A vehicle (200) comprising a battery module arrangement (1) according to any one of examples 1-11 and/or a battery pack (100) according to any one of examples 12-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module arrangement (1) for a battery pack (100), the battery module arrangement (1) having a longitudinal extension in a longitudinal direction (L), a width extension in a width direction (W) and a height extension in a height direction (H), the battery module arrangement (1) comprising:
- a first set of cylindrical battery cells (2),
- a first holder (3) for the first set of cylindrical battery cells (2), the first holder (3) having a first side (31) facing in a first direction which corresponds to the longitudinal direction (L) and a second side (32) facing in a second direction being opposite to the first direction, wherein the first holder (3) comprises a plurality of cylindrical apertures (33) and wherein each cylindrical aperture (33) extends through the first holder (3) along the longitudinal direction (L) between the first and second sides (31, 32),
wherein each cylindrical battery cell (2) of the first set of cylindrical battery cells (2) is provided in a respective cylindrical aperture (33) of the plurality of cylindrical apertures (33) such that the cylindrical battery cell (2) has a longitudinal extension along the longitudinal direction (L), and
wherein each cylindrical battery cell (2) of the first set of cylindrical battery cells (2) is provided in the respective cylindrical aperture (33) such that the cylindrical battery cell (2) protrudes from the first holder (3) on the first side (31) and on the second side (32).

2. The battery module arrangement (1) according to claim 1, comprising:
- a second set of cylindrical battery cells (4),
- a second holder (5) for the second set of cylindrical battery cells (4), the second holder (5) having a third side (51) facing in the first direction and a fourth side (52) facing in the second direction, and wherein the fourth side (52) of the second holder (5) is facing the first side (31) of the first holder (3), wherein the second holder (5) comprises a plurality of cylindrical apertures (53) and wherein each cylindrical aperture (53) extends through the second holder (5) along the longitudinal direction (L) between the third and fourth sides (51, 52),
wherein each cylindrical battery cell (4) of the second set of cylindrical battery cells (4) is provided in a respective cylindrical aperture (53) of the plurality of cylindrical apertures (53) such that the cylindrical battery cell (4) has a longitudinal extension along the longitudinal direction (L), and
wherein each cylindrical battery cell (4) of the second set of cylindrical battery cells (4) is provided in the respective cylindrical aperture (53) such that the cylindrical battery cell (4) protrudes from the second holder (5) on the third side (51) and on the fourth side (52).

3. The battery module arrangement (1) according to claim 2, comprising a bottom bracket (6) provided below the first and second holders (3, 5), as seen in the height direction (H), wherein the bottom bracket (6) connects the first and second holders (3, 5) and is configured as a load-bearing support structure for the first and second holders (3, 5).

4. The battery module arrangement (1) according to any one of claims 2-3, comprising at least one side bracket (71, 72) provided on a side of the first and second holders (3, 5) which faces away from the battery module arrangement (1) in a direction along the width direction (W), wherein the at least one side bracket (71, 72) connects the first and second holders (3, 5).

5. The battery module arrangement (1) according to any one of the preceding claims, wherein the first holder (3) comprises:
- a first wall member (311) associated with the first side (31) and a second wall member (321) associated with the second side (32), wherein the first and second wall members (311, 321) are offset from each other in the longitudinal direction (L) such that a space (S) is formed therebetween.

6. The battery module arrangement (1) according to any one of the preceding claims, when also being dependent on claim 2, wherein the second holder (5) comprises:
- a third wall member (511) associated with the third side (51) and a fourth wall member (521) associated with the fourth side (52), wherein the third and fourth wall members (511, 521) are offset from each other in the longitudinal direction (L) such that a space (S) is formed therebetween.

7. The battery module arrangement (1) according to any one of the preceding claims, further comprising a cooling plate member (8) for cooling the cylindrical battery cells (2, 4), wherein the cooling plate member (8) is located adjacent the first side (31) of the first holder (3) and extends in the width direction (W) and the height direction (H) such that the cooling plate member (8) faces each one of end portions (21) of the first set of cylindrical battery cells (2).

8. The battery module arrangement (1) according to claim 7, when also being dependent on claim 2, wherein the cooling plate member (8) is further located adjacent the fourth side of the second holder (5) and extends in the width direction (W) and the height direction (H) such that the cooling plate member (8) faces each one of end portions (41) of the second set of cylindrical battery cells (4).

9. The battery module arrangement (1) according to claim 7 or 8, wherein the cooling plate member (8) comprises an inlet (81) and an outlet (82) for coolant fluid, wherein the inlet (81) and/or the outlet (82) are/is provided at a side (11) of the battery module arrangement (1) which is facing away from the battery module arrangement (1) in a direction which is substantially perpendicular to the longitudinal direction (L).

10. The battery module arrangement (1) according to any one of claims 7-9, comprising a bottom bracket (6) provided below the first holder (3), as seen in the height direction (H), wherein the cooling plate member (8) is connected to the first holder (3) and to the bottom bracket (6) such that loads can be transferred via the cooling plate member (8) between the first holder (3) and the bottom bracket (6).

11. A battery pack (100) comprising at least one battery module arrangement (1) according to any one of the preceding claims.

12. The battery pack (100) according to claim 11, comprising a housing (110), wherein the at least one battery module arrangement (1) is provided in the housing (110).

13. The battery pack (100) according to any one of claims 11-12, comprising at least two battery module arrangements (1) according to any one of claims 1-10, wherein the battery module arrangements (1) are stacked next to each other along a longitudinal direction (L) of the battery pack (100) which corresponds to the longitudinal directions (L) of the at least two battery module arrangements (1).

14. The battery pack (100) according to claim 13, further comprising at least one connecting bracket (120) which connects the at least two battery module arrangements (1), wherein the at least one connecting bracket (120) connects the at least two battery module arrangements (1) via respective sides (12) of the battery module arrangements (1) which are facing away from the battery module arrangements (1) in a direction which is substantially perpendicular to the longitudinal direction (L) of the battery pack (100).

15. A vehicle (200) comprising a battery module arrangement (1) according to any one of claims 1-10 and/or a battery pack (100) according to any one of claims 11-14.
